# EUROPEAN PATENT APPLICATION

(11) **EP 4 039 404 A1**
(43) Date of publication of application: **10.08.2022**
(21) Application number: 22152001.8
(22) Date of filing: 18.01.2022
(51) Int. Cl.: B23K 35/02, B23K 35/30, B23K 35/36, B23K 35/368, C22C 38/16, C22C 38/22, C22C 38/28, C22C 38/32, C22C 38/38, C22C 38/42, C22C 38/44, C22C 38/46, C22C 38/48, C22C 38/50, C22C 38/54, C22C 38/58, B23K 1/00

(54) **FLUX-CORED WIRE, WELD METAL, GAS SHIELDED ARC WELDING METHOD, AND WELDING JOINT PRODUCTION METHOD**

(30) Priority: 05.02.2021 JP 2021017800
(71) Applicant: KABUSHIKI KAISHA KOBE SEIKO SHO (KOBE STEEL, LTD.), Hyogo 651-8585 (JP)
(72) Inventor: KANO, SATORU, Kanagawa, 251-8551 (JP); INOMOTO, MASAHIRO, Hyogo, 651-2271 (JP); ITO, TAKANORI, Kanagawa, 251-8551 (JP)
(74) Representative: Müller-Boré & Partner Patentanwälte PartG mbB

(57) **Abstract**

A flux-cored wire constituted by a steel sheath filled with a flux contains, relative to a total mass of the wire, C: 0.01 mass% or more and 0.10 mass% or less, Si: more than 0 mass% and 0.45 mass% or less, Mn: 1.0 mass% or more and 3.0 mass% or less, Ni: 3.1 mass% or more and 5.5 mass% or less, Mg: 0.10 mass% or more and 1.00 mass% or less, Mo: 0.05 mass% or more and 0.65 mass% or less, Cr: 0.65 mass% or less, Cu: 0.85 mass% or less, and V: 0.045 mass% or less, in which, when a Ni content, a Mn content, and a Si content in the wire relative to the total mass of the wire in terms of mass% are respectively represented by [Ni], [Mn], and [Si], [Ni]/([Mn] + [Si]) is 1.10 or more and 5.40 or less.

## Description

### BACKGROUND OF THE INVENTION

### 1. Field of the Invention

The present invention relates to a flux-cored wire used in welding high tensile strength steel, a weld metal, a gas shielded arc welding method, and a welding joint production method.

### 2. Description of the Related Art

Weld products such as offshore structures and tanks used in drilling and production of petroleum, gas, etc., are required to have upscaled facilities and operate in cold climates, and steel sheets and welding materials used in production therefor are required to have high strength and excellent low-temperature toughness. In order to further improve the quality of the weld products in addition to these properties, a post weld heat treatment (PWHT) is performed in some cases. An effect of suppressing cracking in the weld zones can be obtained by performing the PWHT since, for example, residual stress in the weld zones can be eliminated.

However, performing PWHT could decrease toughness due to weld zone embrittlement caused by precipitation hardening, temper embrittlement, and the like. In particular, weld zones of high tensile strength steel undergo extensive embrittlement when subjected to PWHT due to the influence of various elements added to improve the strength, and the higher the strength, the more instances in which the PWHT cannot be employed.

Accordingly, development of a welding material that can be used for high tensile strength steel and that has excellent properties even after PWHT is pursued.

For example, Japanese Unexamined Patent Application Publication No. 9-253886 proposes a flux-cored wire with which the high-temperature strength and the low-temperature toughness of a weld zone after a long PWHT can be improved in welding 690 MPa-class high tensile strength steel. This patent document describes that, as a result of performing PWHT at 620°C for 12 hours, the low-temperature toughness was excellent.

In addition, Japanese Unexamined Patent Application Publication No. 63-157795 discloses a wire used in gas shielded arc welding of 60 Kgf/mm² (about 588 MPa) or higher high tensile strength steel, with which the decrease in toughness due to PWHT does not occur. This patent document also describes a wire for 80 Kgf/mm² (about 785 MPa)-class high tensile strength steel, with which there is substantially no decrease in toughness after performing PWHT at 600°C for 3 hours.

However, both of the aforementioned patent documents consider only one set of PWHT conditions, and excellent toughness is not necessarily always obtained under other PWHT conditions.

Furthermore, it is considered that a wire with a greater margin of PWHT conditions can be used in a wide variety of weld products, is easy to administer, and can further improve the quality stability of weld zones.

Meanwhile, it has been known from the past that PWHT could decrease toughness depending on the conditions, and that the PWHT conditions are to be strictly governed by the type and thickness of the material, the welding joint, the welding conditions, etc.

Thus, it is extremely difficult to create a margin in the PWHT conditions, and, since increasing the strength involves incorporation of more additive elements, the PWHT conditions become more stringent to address the possibility of embrittlement phenomena such as temper embrittlement.

### SUMMARY OF THE INVENTION

The present invention has been made to address the aforementioned issues, and an object thereof is to provide a flux-cored wire for high tensile strength steel, with which a weld zone having excellent low-temperature toughness while maintaining the target strength can be obtained as as-welded and under a wide range of PWHT conditions. A gas shielded arc welding method and a welding joint production method are also provided. Another object is to provide a weld metal that has excellent low-temperature toughness while maintaining the target strength even under a wide range of PWHT conditions.

The aforementioned objects of the present invention are achieved by a flux-cored wire constituted by a steel sheath filled with a flux contains, relative to a total mass of the wire:
C: 0.01 mass% or more and 0.10 mass% or less,
Si: more than 0 mass% and 0.45 mass% or less,
Mn: 1.0 mass% or more and 3.0 mass% or less,
Ni: 3.1 mass% or more and 5.5 mass% or less,
Mg: 0.10 mass% or more and 1.00 mass% or less,
Mo: 0.05 mass% or more and 0.65 mass% or less,
Cr: 0.65 mass% or less,
Cu: 0.85 mass% or less, and
V: 0.045 mass% or less,
in which when a Ni content in the wire relative to the total mass of the wire in terms of mass% is represented by [Ni], a Mn content in the wire relative to the total mass of the wire in terms of mass% is represented by [Mn], and a Si content in the wire relative to the total mass of the wire in terms of mass% is represented by [Si], [Ni]/([Mn] + [Si]) is 1.10 or more and 5.40 or less.

Preferably, the aforementioned flux-cored wire further contains, relative to the total mass of the wire, B: 0.10 mass% or less.

Preferably, the aforementioned flux-cored wire further contains at least one element selected from the group consisting of Ti, Al, Zr, F, Na, and K within the following ranges relative to the total mass of the wire:
Ti: 2.5 mass% or more and 6.0 mass% or less,
Al: 0.50 mass% or less,
Zr: 0.50 mass% or less,
F: 0.10 mass% or more and 0.50 mass% or less, and
a total of Na and K: 0.01 mass% or more and 0.30 mass% or less.

The aforementioned objects of the present invention are also achieved by a weld metal obtained by performing gas shielded arc welding by using the aforementioned flux-cored wire.

The aforementioned objects of the present invention are also achieved by a gas shielded arc welding method that includes performing gas shielded arc welding by using the aforementioned flux-cored wire.

The aforementioned objects of the present invention are also achieved by a welding joint production method including performing gas shielded arc welding by using high tensile strength steel as a base metal and the aforementioned flux-cored wire.

The present invention can provide a flux-cored wire for high tensile strength steel, from which a weld zone having excellent low-temperature toughness can be obtained while maintaining the target strength even as as-welded and under a wide range of PWHT conditions.

The present invention can also provide a weld metal having excellent low-temperature toughness while maintaining the target strength even under a wide range of PWHT conditions.

The present invention can also provide a gas shielded arc welding method and a welding joint production method with which a weld zone having excellent low-temperature toughness while maintaining the target strength can be obtained even under a wide range of PWHT conditions.

### DESCRIPTION OF THE PREFERRED EMBODIMENTS

Hereinafter, embodiments for implementing the present invention (hereinafter, referred to as the "present embodiments") are described in detail. The present invention is not limited to the embodiments described below, and can be subjected to any modifications and alternations without departing from the scope of the gist of the present invention.

In the present embodiments, a "content" refers to mass% relative to the total mass of the flux-cored wire unless otherwise noted. Each of the elements and compounds contained in the flux-cored wire according to the present embodiments may be contained in a steel sheath or a flux or in both a steel sheath and a flux.

Furthermore, unless otherwise noted, each of the elements contained in the flux-cored wire may take a metal form, a compound form, or both a metal form and a compound form. Thus, irrespective of the form in which each of the elements is contained in the flux-cored wire, the content thereof is specified by a value converted on a single element basis. For example, when Si is concerned, the Si content is a total of Si-converted values of metallic Si and Si compounds. Here, metallic Si includes Si single element and Si alloys.

### 1. Flux-cored wire

A flux-cored wire (hereinafter, may be simply referred to as a "wire") according to the present embodiment is constituted by a steel sheath (hereinafter, may be simply referred to as a "sheath") filled with a flux.

In the present embodiment, the outer diameter of the wire is not particularly limited and is, for example, preferably 0.9 mm or more and 1.6 mm or less. The flux filling rate may be set to any desired value as long as the contents of the respective elements in the wire are within the scope of the present invention; however, in order to improve the wire drawability and the wire feedability, the flux filling rate is preferably 10 mass% or more and 20 mass% or less relative to the total mass of the wire. Furthermore, the sheath of the wire may be seamed or seamless, and the form of the seam and the cross-sectional shape of the wire are not particularly limited.

The present inventors have studied the mechanism in which the toughness of a high-strength weld zone decreases by performing PWHT, and have conducted extensive investigations to obtain a weld zone that exhibits excellent low-temperature toughness even when subjected to PWHT under a wide range of conditions. As a result, the following is discovered, and the present invention has been made. It should be understood that although the "weld zone" consists of a weld metal and a heat-affected zone (HAZ), the description of the present application below discusses the weld metal.

First, a known mechanism behind the decrease in toughness in high strength steel is described.

Heretofore, the following two causes have been named as the main causes for the decrease in toughness in the weld metal after PWHT.

Cause 1: Hardening of the weld metal that occurs when Cr, Mo, Nb, V, etc., are contained in large quantitates in the weld metal and form carbides with C and form precipitates.

Cause 2: Embrittlement phenomena, such as temper embrittlement, caused by slow cooling from the PWHT temperature.

Heretofore, it has been considered that, due to the aforementioned Cause 1 and Cause 2, mainly the grain boundary strength of the weld metal decreases, and, as a result, the toughness decreases.

Thus, heretofore, the following measures have been taken to obtain excellent toughness while maintaining the target strength after the PWHT.
Measure 1: Suppression of precipitation and growth of carbides at prior austenite grain boundaries.
Measure 2: Suppression of segregation of impurity elements at prior austenite grain boundaries.

However, depending on the PWHT conditions, the aforementioned Measure 1 and Measure 2 are not sufficient. Note that, in general, the PWHT conditions include elements such as retention temperature and retention time, and can be recapitulated by a Larson-Miller parameter (hereinafter referred to as "LMP") that uses a combination of these elements as parameters.

Thus, in the description of the present application, a flux-cored wire from which a weld metal that has excellent low-temperature toughness while maintaining the target strength is obtained under the following three conditions, a to c, is deemed to be adaptable to a wide range of PWHT conditions.
Condition a: As-welded.
Condition b: As PWHT conditions that involve a high LMP, a temperature of 620°C and a time of 8 hours (hereinafter referred to as a "high LMP condition").
Condition c: As PWHT conditions that involve a low LMP, a temperature of 580°C and a time of 2 hours (hereinafter referred to as a "low LMP condition").

It is known that, under Condition a (as welded) and Condition b (high LMP condition), good low-temperature toughness can be obtained by adding an appropriate amount of Ni in the wire in addition to employing the aforementioned Measure 1 and Measure 2.

Meanwhile, under Condition c (low LMP condition), good low-temperature toughness cannot be obtained by merely adding an appropriate amount of Ni. The present inventors have discovered the mechanism in which the low-temperature toughness decreases when the PWHT is performed under Condition c (low LMP condition), and found a measure with which a weld metal having excellent low-temperature toughness while maintaining the target strength can be obtained even under a wide range of PWHT conditions. In the description below, the mechanism in which the low-temperature toughness decreases under Condition c (low LMP condition), and a measure to address the decrease are described.

When a large quantity of Ni is contained in a weld metal, a Ni-containing segregation band (hereinafter referred to as a "Ni segregation band"), in other words, a Ni-rich region, occurs on the weld metal structure. This Ni segregation band does not affect the low-temperature toughness under Condition a (as welded) and Condition b (high LMP condition).

However, under Condition c (low LMP condition), the C content increases in the Ni segregation band, and generation of martensite-austenite constituent and generation and coarsening of carbides are accelerated in the Ni segregation band. In particular, generation of martensite-austenite constituent is extensive, and due to the influence of these products, brittle fracture easily occurs in the Ni segregation band; thus, the low-temperature toughness decreases as a result.

From these findings, the present inventors have found that, as the measure to obtain a weld metal having excellent low-temperature toughness while maintaining the target strength after the PWHT, it is effective to implement Measure 3 described below in addition to Measure 1 and Measure 2.

Measure 1: Suppression of precipitation and growth of carbides at prior austenite grain boundaries.

Measure 2: Suppression of segregation of impurity elements at prior austenite grain boundaries.

Measure 3: Suppression of generation of martensite-austenite constituent in the Ni segregation band.

Moreover, the present inventors have found that the aforementioned Measures 1 to 3 can be achieved by appropriately controlling the chemical component composition of the flux-cored wire and a parameter calculated from the Ni, Si, and Mn contents. In other words, by using a wire that has realized Measures 1 to 3, a weld metal that has excellent low-temperature toughness while maintaining the target strength not only as as-welded but also after the PWHT under a wide range of conditions can be obtained.

Furthermore, Measure 4 below is preferably implemented in addition to Measures 1 to 3 above since an excessive increase in strength is prevented and the decrease in low-temperature toughness can be suppressed.

Measure 4: Suppression of generation of intragranular carbides.

Note that generation of carbides can be suppressed by adjusting at least the C, Cr, Mo, and V contents to be within the specified ranges described below.

Hereinafter, a specific chemical component composition of the wire and the reasons for limiting the contents thereof are described in further details.

### C: 0.01 mass% or more and 0.10 mass% or less

Carbon (C) is a component that has an effect of improving the strength of a weld metal. At a C content of less than 0.01 mass%, the target strength cannot be obtained. Thus, the C content relative to the total mass of the wire is 0.01 mass% or more, preferably 0.02 mass% or more, and more preferably 0.03 mass% or more.

However, at a C content exceeding 0.10 mass%, coarsening of carbides is promoted, and the low-temperature toughness after the PWHT decreases. Thus, the C content relative to the total mass of the wire is 0.10 mass% or less, preferably 0.09 mass% or less, and more preferably 0.08 mass% or less.

### Si: more than 0 mass% and 0.45 mass% or less

Silicon (Si) is a component that promotes generation of martensite-austenite constituent in the Ni segregation band, and increasing the Si content in the weld metal promotes temper embrittlement and decreases the low-temperature toughness. However, at a Si content exceeding 0.45 mass%, the low-temperature toughness after the PWHT decreases. Thus, the Si content relative to the total mass of the wire is 0.45 mass% or less, preferably 0.40 mass% or less, and more preferably 0.35 mass% or less.

Meanwhile, Si is a component that cannot be completely decreased to 0 mass%, and is a deoxidizing element that has an effect of suppressing blowholes. Even a minute amount of Si contained in the wire can have an effect of suppressing blowholes. Thus, the Si content relative to the total mass of the wire is more than 0 mass%, preferably 0.10 mass% or more, and more preferably 0.15 mass% or more.

### Mn: 1.0 mass% or more and 3.0 mass% or less

Manganese (Mn) is a component that has an effect of improving the strength of the weld metal. At a Mn content of less than 1.0 mass%, the target strength cannot be obtained. Thus, the Mn content relative to the total mass of the wire is 1.0 mass% or more, preferably 1.2 mass% or more, and more preferably 1.4 mass% or more.

In addition, Mn is a component that promotes generation of martensite-austenite constituent particularly in the Ni segregation band, and increasing the Mn content in the weld metal promotes temper embrittlement and decreases the low-temperature toughness. Since low-temperature toughness after the PWHT decreases at a Mn content exceeding 3.0 mass%, the Mn content relative to the total mass of the wire is 3.0 mass% or less, preferably 2.9 mass% or less, and more preferably 2.8 mass% or less.

### Ni: 3.1 mass% or more and 5.5 mass% or less

Nickel (Ni) is a component that has an effect of improving the strength and an effect of improving low-temperature toughness of a weld metal through matrix strengthening. At a Ni content of less than 3.1 mass%, the target strength and low-temperature toughness cannot be obtained. Thus, the Ni content relative to the total mass of the wire is 3.1 mass% or more, preferably 3.2 mass% or more, and more preferably 3.4 mass% or more.

Meanwhile, at a Ni content exceeding 5.5 mass%, high-temperature cracking may occur. Thus, the Ni content relative to the total mass of the wire is 5.5 mass% or less, preferably 5.3 mass% or less, and more preferably 5.0 mass% or less.

### Mg: 0.10 mass% or more and 1.00 mass% or less

Magnesium (Mg) is a component that has a deoxidizing effect and improves the strength. At a Mg content of less than 0.10 mass%, the target strength cannot be obtained. Thus, the Mg content relative to the total mass of the wire is 0.10 mass% or more, preferably 0.30 mass% or more, and more preferably 0.35 mass% or more.

However, at a Mg content exceeding 1.00 mass%, the strength increases excessively, and the low-temperature toughness decreases. Thus, the Mg content relative to the total mass of the wire is 1.00 mass% or less, preferably 0.90 mass% or less, and more preferably 0.80 mass% or less.

### Mo: 0.05 mass% or more and 0.65 mass% or less

Molybdenum (Mo) is a component that improves the strength of the weld metal and has an effect of suppressing temper embrittlement. Precipitation of the intragranular Mo carbides of the weld metal suppresses growth of the other carbides precipitating at the grain boundaries, and thus can suppress the decrease in low-temperature toughness after PWHT. At a Mo content of less than 0.05 mass%, the target low-temperature toughness after the PWHT cannot be obtained while maintaining the target strength. Thus, the Mo content relative to the total mass of the wire is 0.05 mass% or more, preferably 0.10 mass% or more, and more preferably 0.13 mass% or more.

However, at a Mo content exceeding 0.65 mass%, intragranular Mo carbides precipitate and grow, the strength increases excessively, and the low-temperature toughness decreases as a result of performing PWHT. Thus, the Mo content relative to the total mass of the wire is 0.65 mass% or less, preferably 0.55 mass% or less, and more preferably 0.44 mass% or less.

### Cr: 0.65 mass% or less (including 0 mass%)

Chromium (Cr) is a component effective for achieving both strength and toughness of the weld metal. In the present embodiment, the lower limit of the Cr content is not particularly specified; however, when Cr is to be contained in the wire to achieve both strength and toughness, the Cr content relative to the total mass of the wire is preferably 0.01 mass% or more, more preferably 0.05 mass% or more, and yet more preferably 0.10 mass% or more.

Meanwhile, Cr is also a component that promotes precipitation and growth of mainly coarse grain boundary carbides by PWHT and decreases the low-temperature toughness. At a Cr content exceeding 0.65 mass% relative to the total mass of the wire, the low-temperature toughness after the PWHT decreases. Thus, the Cr content relative to the total mass of the wire is 0.65 mass% or less, preferably 0.55 mass% or less, and more preferably 0.45 mass% or less.

### Cu: 0.85 mass% or less (including 0 mass%)

Copper (Cu) is a component that has an effect of refining the structure of the weld metal and improve low-temperature toughness while maintaining the strength. In the present embodiment, the lower limit of the Cu content is not particularly specified; however, when Cu is to be contained in the wire to improve the low-temperature toughness, the Cu content relative to the total mass of the wire is preferably 0.01 mass% or more, more preferably 0.02 mass% or more, and more yet preferably 0.05 mass% or more.

However, at a Cu content exceeding 0.85 mass%, generation of precipitates is promoted and the low-temperature toughness decreases by performing PWHT. Thus, the Cu content relative to the total mass of the wire is 0.85 mass% or less, preferably 0.65 mass% or less, more preferably 0.45 mass% or less, still more preferably 0.35 mass% or less, and most preferably 0.20 mass% or less. Note that when the wire surface is to be plated with Cu, Cu contained in the plating is also included in the Cu content specified in the present embodiment.

### V: 0.045 mass% or less (including 0 mass%)

Vanadium (V) has an effect of improving the strength of the weld metal, but is a component that promotes precipitation and growth of the grain-boundary carbides and decreases the low-temperature toughness. In the present embodiment, the lower limit of the V content is not particularly specified; however, when V is to be contained in the wire to improve the strength of the weld metal, the V content relative to the total mass of the wire is preferably 0.010 mass% or more and more preferably 0.015 mass% or more.

However, at a V content exceeding 0.045 mass%, the low-temperature toughness after the PWHT decreases. Thus, the V content relative to the total mass of the wire is 0.045 mass% or less and preferably 0.035 mass% or less.

### [Ni]/([Mn] + [Si]): 1.10 or more and 5.40 or less

As described above, by appropriately controlling the parameter value calculated from the Ni, Si, and Mn contents, generation of the martensite-austenite constituent in the Ni segregation band is suppressed as Measure 3 described above and a weld metal having excellent low-temperature toughness can be obtained while maintaining the target strength.

When the value obtained from [Ni]/([Mn] + [Si]) is less than 1.10, martensite-austenite constituent is easily generated in the Ni segregation band, and the low-temperature toughness after PWHT decreases. Thus, the [Ni]/([Mn] + [Si]) is 1.10 or more, preferably 1.15 or more, and more preferably 1.20 or more.

Meanwhile, when the value obtained from [Ni]/([Mn] + [Si]) exceeds 5.40, due to the low [Mn] + [Si] value, the as-welded strength decreases, and the strength after the PWHT also decreases. Thus, the [Ni]/([Mn] + [Si]) is 5.40 or less, preferably 5.00 or less, more preferably 4.50 or less, and yet more preferably 4.00 or less.

In the formula above, [Ni] denotes the value, in terms of mass%, of the Ni content in the wire relative to the total mass of the wire.

[Mn] denotes the value, in terms of mass%, of the Mn content in the wire relative to the total mass of the wire.

[Si] denotes the value, in terms of mass%, of the Si content in the wire relative to the total mass of the wire.

### Total of C, Si, Mn, Ni, Mg, Mo, Cr, Cu, and V contents: 5.0 mass% or more and 10.0 mass% or less

In the present embodiment, the total of the C, Si, Mn, Ni, Mg, Mo, Cr, Cu, and V contents is, from the viewpoint of improving the weldability , preferably 5.0 mass% or more and more preferably 6.0 mass% or more. From the viewpoint of improving the wire drawability, the total of the aforementioned components is preferably 10.0 mass% or less and more preferably 9.0 mass% or less.

The wire according to the present embodiment preferably contains B in an amount within the range described below. When B is contained in the wire, the content thereof is limited for the following reasons.

### B: 0.10 mass% or less (including 0 mass%)

Boron (B) segregates at the prior austenite grain boundaries, and is a component that has an effect of improving toughness of the weld metal through suppression of pro-eutectoid ferrite. However, it is considered that B exists as free B in a weld metal mainly composed of bainite and having a strength higher than 590 MPa, and, depending on the abundance of B, free B decreases the interface energy between Ti oxides and austenite and thereby suppresses transformation of intragranular bainite. In other words, excessive addition of B suppresses bainite generation around the Ti oxides, lath bainite is formed from the austenite grain boundaries, and a fine structure effective for improving toughness is not obtained. In the present embodiment, the lower limit of the B content is not particularly specified; however, when B is to be contained in the wire, the B content relative to the total mass of the wire is preferably 0.10 mass% or less, more preferably 0.08 mass% or less, and yet more preferably 0.05 mass% or less.

Moreover, the wire according to the present embodiment may further contain at least one element selected from the group consisting of Ti, Al, Zr, F, Na, and K in amounts within the ranges described below. The reasons for limiting the contents of these elements when these elements are contained in the wire are described below.

### Ti: 2.5 mass% or more and 6.0 mass% or less

Titanium (Ti) functions as a slag former or the like, and is a component that facilitates welding in welding positions other than the flat position, for example, the vertical position, the overhead position, etc., and has an effect of obtaining satisfactory weldability in all positions. When Ti is to be contained in the wire, in order to maintain the slag generation amount to an appropriate level and obtain satisfactory weldability , the Ti content relative to the total mass of the wire is preferably typically 2.5 mass% or more and more preferably 3.0 mass% or more.

Furthermore, the Ti content relative to the total mass of the wire is typically 6.0 mass% or less and preferably 5.0 mass% or less.

### Al: 0.50 mass% or less (including 0 mass%)s

Aluminum (Al) is a component that has an effect of improving bead conformity and forming a flat bead shape. When Al is to be contained in the wire, in order to improve the bead conformity and obtain a flat bead shape while maintaining satisfactory slag releasability, the Al content relative to the total mass of the wire is preferably 0.50 mass% or less and more preferably 0.25 mass% or less.

### Zr: 0.50 mass% or less (including 0 mass%)

Zirconium (Zr) is a component that has an effect of improving bead conformity and forming a flat bead shape. When Zr is to be contained in the wire, in order to improve the bead conformity and obtain a flat bead shape while maintaining satisfactory slag releasability, the Zr content relative to the total mass of the wire is preferably 0.50 mass% or less and more preferably 0.25 mass% or less.

### F: 0.10 mass% or more and 0.50 mass% or less

Fluorine (F) is a component that has an effect of stabilizing the arc. When F is to be contained in the wire, in order to make it possible to suppress the sputter generation amount and obtain sufficient arc stability, the F content relative to the total mass of the wire is preferably 0.10 mass% or more and more preferably 0.15 mass% or more.

Furthermore, the F content relative to the total mass of the wire is preferably 0.50 mass% or less and more preferably 0.45 mass% or less.

### Total of Na and K: 0.01 mass% or more and 0.30 mass% or less

Na and K are components that have an effect of stabilizing the arc. When at least one of Na and K is to be contained in the wire, in order to make it possible to suppress the sputter generation amount and obtain sufficient arc stability, the total amount of Na and K relative to the total mass of the wire is preferably 0.01 mass% or more and more preferably 0.03 mass% or more.

Furthermore, the total amount of Na and K relative to the total mass of the wire is preferably 0.30 mass% or less and more preferably 0.25 mass% or less.

### Other components and impurities

Iron (Fe) is the main component of the wire according to the present embodiment. The Fe content relative to the total mass of the wire is preferably 82 mass% or more and more preferably 84 mass% or more.

Furthermore, in the present embodiment, in addition to the aforementioned components, O (oxygen), Ca, Ba, Li, Nb, etc., may be contained, and the O (oxygen) content relative to the total mass of the wire is preferably 1 mass% or more and 5 mass% or less. In addition, the total of the contents of Ca, Ba, Li, Nb, etc., relative to the total mass of the wire is preferably 1 mass% or less.

The balance is inevitable impurities, and the total amount of inevitable impurities is preferably limited to 0.15 mass% or less relative to the total mass of the wire. Examples of the inevitable impurities include P and S, and, from the viewpoint of preventing high-temperature cracking, the P content and the S content relative to the total mass of the wire are preferably each 0.015 mass% or less.

### 2. Method for producing flux-cored wire

The flux-cored wire according to the present embodiment can be produced by, for example, the following method. First, a steel strip that constitutes a sheath is formed into a U-shaped open pipe by a forming roll while feeding in the longitudinal direction. Next, the sheath is filled with a flux obtained by blending particular amounts of metals or alloys, compounds, etc., such that a particular chemical composition is obtained, and then the sheath filled with the flux is worked to obtain a circular cross section. At this stage, the joint of the sheath may be, for example, welded so as to form a seamless sheath. Subsequently, the obtained wire is drawn by cold working into a wire diameter of, for example, 0.9 mm or more and 2.0 mm or less, to produce a flux-cored wire. Here, annealing may be performed during cold working.

### 3. Weld metal

A weld metal according to the present embodiment is obtained by performing gas shielded arc welding using the flux-cored wire according to the present embodiment described in "1. Flux-cored wire" above.

Note that, regarding the weld metal according to the present embodiment, conditions other than the use of the flux-cored wire according to the present embodiment are not particularly limited, and the type of the base metal can be appropriately selected according to the desired properties.

### 4. Gas shielded arc welding method

A gas shielded arc welding method according to the present embodiment is a method in which welding is performed by using the flux-cored wire according to the present embodiment described in "1. Flux-cored wire" above.

Note that, in the gas shielded arc welding method of the present embodiment, conditions other than the use of the flux-cored wire according to the present embodiment are not particularly limited, and, regarding the type of base metal, the welding voltage, the welding current, the welding positions, etc., general conditions employed in the flux-cored wire welding method can be used. Although no limitation is imposed on the shielding gas, from the viewpoint of further improving the weldability , the shielding gas is preferably MAG and more preferably 80 vol% Ar-20 vol% CO₂.

### 5. Welding joint production method

A welding joint production method according to the present embodiment is a method for performing gas shielded arc welding by using high tensile strength steel as a welding base metal and the flux-cored wire according to the present embodiment described in "1. Flux-cored wire" above.

Note that, in the welding joint production method, welding conditions other than the use of high tensile strength steel as a welding base metal and the use of the flux-cored wire according to the present embodiment in gas shielded arc welding are not particularly limited, and, regarding the welding voltage, the welding current, the welding positions, etc., general conditions employed in the flux-cored wire welding method can be used. Although no limitation is imposed on the shielding gas, from the viewpoint of further improving the weldability , the shielding gas is preferably MAG and more preferably 80 vol% Ar-20 vol% CO₂.

In addition, the high tensile strength steel that can be used as a base metal may be any but is preferably 720 MPa class or higher, and examples thereof include P690Q, P690QH, P690QL1, and P690QL2 in EN 10028-6:2017, KD620, KD690, KE620, and KE690 specified by NIPPON KAIJI KYOKAI (NK), and VL690 specified by DNV GL.

### EXAMPLES

Examples and Comparative Examples of the flux-cored wire according to the present embodiment will now be described.

### Evaluation of mechanical properties of weld metal

### Preparation of wire

First, a strip-shaped steel sheath having chemical components shown in Table 1 below was filled with a flux to prepare a flux-cored wire having a diameter of 1.2 mm and containing various components. The flux filling rate was adjusted to be within the range of 13.0 mass% or more and 15.5 mass% or less relative to the total mass of the wire.

### Gas shielded arc welding

Next, gas shielded arc welding was performed on a base metal having a sheet thickness and chemical components shown in Table 2 below by using the obtained flux-cored wire.

In this example, a V groove was formed in the base metal, and gas shielded arc welding was performed under the welding conditions shown in Table 3 below so as to produce a welding joint.

### Evaluation of mechanical properties

For evaluating the mechanical properties of the weld metal, the tensile performance and the impact performance were evaluated by referring to "Methods of tension and impact tests for deposited metal" specified in JIS Z 3111:2005 by taking a tensile test piece (A2 sample), and an impact test piece (a V notch test piece) from a center portion of the weld metal in the sheet thickness direction. In studying a wide range of PWHT conditions, changes in tensile strength and toughness that occurred by performing PWHT at various retention temperatures for various retention times were recapitulated by using a Larson-Miller parameter (LMP) as the PWHT conditions. In this example, the PWHT conditions of a temperature of 580°C and 2 hours (LMP = 17.3 × 10³) were employed as the low LMP condition, and the PWHT conditions of a temperature of 620°C and 8 hours (LMP = 18.7 × 10³) were employed as the high LMP condition.

A tensile test was performed on an as-welded test piece, a low LMP condition test piece, and a high LMP condition test piece at room temperature as the test temperature (about 20 ± 2°C) so as to measure the tensile strength.

In this example, each of the as-welded test piece, the low LMP condition test piece, and the high LMP condition test piece was judged as satisfying the target strength if the tensile strength (TS) was 720 MPa or more.

An impact test was performed on an as-welded test piece, a low LMP condition test piece, and a high LMP condition test piece at a test temperature of -40°C, and the toughness was evaluated by measuring the Charpy absorbed energy (vE-40°C).

In this example, each of the as-welded test piece, the low LMP condition test piece, and the high LMP condition test piece was judged as having excellent low-temperature toughness if the adsorbed energy at -40°C was 50 J or higher.

In addition, of the as-welded, low LMP condition, and high LMP condition test pieces, those which satisfied the target strength and exhibited excellent low-temperature toughness were evaluated as acceptable and others were evaluated as unacceptable.

The chemical components of the wires used are shown in Tables 4 and 5 below, and the results of evaluation of the mechanical properties are shown in Table 6. In Tables 4 and 5 below, [Ni] is a value, in terms of mass%, of the Ni content in the wire relative to the total mass of the wire, [Mn] is a value, in terms of mass%, of the Mn content in the wire relative to the total mass of the wire, and [Si] is a value, in terms of mass%, of the Si content in the wire relative to the total mass of the wire.

The balance of the chemical components of the wires shown in Tables 4 and 5 was Fe, O (oxygen), Ca, Ba, Li, and inevitable impurities. Furthermore, for the Ni content in Table 4, the notation "-" represents that the content was below the quantitative limit, that is, less than 0.01 mass%; for the Cr content, the notation "-" represents that the content was below the quantitative limit, that is, less than 0.01 mass%; for the Cu content, the notation "-" represents that the content was below the quantitative limit, that is, less than 0.01 mass%; for the B content, the notation "-" represents that the content was below the quantitative limit, that is, less than 0.0002 mass%; and for the V content, the notation "-" represents that the content was below the quantitative limit, that is, less than 0.002 mass%.

Furthermore, in the column "[Ni]/([Mn] + [Si])" in Table 5, the instance where the molecular Ni content was below the quantitative limit and therefore "[Ni]/([Mn] + [Si])" could not be calculated is indicated by "-".

In Table 6, test pieces that could not be evaluated as to their mechanical properties due to cracking, fracture, or the like are indicated by "-" in evaluation result columns.

**Table 1**

| | | | | | |
|---|---|---|---|---|---|
| Steel sheath | Specification | Chemical components (mass%) | | | |
| | JIS G 3141 SPCC steel sheet | C | Mn | P | S |
| | | ≤0.15 | ≤1.00 | ≤0.100 | ≤0.035 |

**Table 2**

| | | | | | | | |
|---|---|---|---|---|---|---|---|
| Base metal | Specification | Sheet thickness (mm) | Chemical components (mass%) | | | | |
| | | | C | Si | Mn | P | S |
| | JIS G3106 SM490A | 20 | 0.16 | 0.35 | 1.30 | 0.012 | 0.001 |

**Table 3**

| | Welding conditions |
|---|---|
| Type and flow rate of shielding gas | 80%Ar-20%CO₂, 25 L/min |
| Wire diameter | 1.2 mm |
| Welding position | Flat |
| Groove shape | V groove |
| Groove angle | 20 ° |
| Groove gap | 16 mm |
| Welding current | 280 A |
| Arc voltage | 30 V |
| Welding speed | 350-430 mm/min |
| Preheat temperature | 100-120 °C |
| Interpass temperature | 140-160 °C |
| Pass sequence | 7 layers, 14 passes |

**Table 4**

| No. | | Chemical components of wire (mass%) | | | | | | | | | | | | | | | [Ni]/([Mn]+[Si]) |
|---|---|---|---|---|---|---|---|---|---|---|---|---|---|---|---|---|---|
| | | C | Si | Mn | Ni | Mg | Mo | Cr | Cu | V | B | Ti | Al | Zr | F | Total of Na and K | |
| Examples | 1 | 0.08 | 0.26 | 2.5 | 3.7 | 0.51 | 0.27 | 0.24 | - | - | - | 3.7 | 0.06 | 0.05 | 0.29 | 0.07 | 1.34 |
| | 2 | 0.08 | 0.26 | 2.5 | 3.7 | 0.51 | 0.19 | - | - | - | - | 3.7 | 0.06 | 0.05 | 0.29 | 0.07 | 1.34 |
| | 3 | 0.08 | 0.26 | 1.4 | 5.2 | 0.51 | 0.28 | 0.24 | - | - | - | 3.4 | 0.05 | 0.05 | 0.29 | 0.07 | 3.13 |
| | 4 | 0.09 | 0.26 | 2.3 | 3.6 | 0.49 | 0.18 | - | - | - | - | 3.7 | 0.06 | 0.05 | 0.28 | 0.07 | 1.41 |
| | 5 | 0.08 | 0.26 | 1.5 | 4.4 | 0.49 | 0.62 | - | - | - | - | 3.4 | 0.05 | 0.05 | 0.28 | 0.07 | 2.50 |
| | 6 | 0.08 | 0.25 | 1.9 | 4.4 | 0.49 | 0.27 | - | - | - | - | 3.5 | 0.05 | 0.05 | 0.28 | 0.07 | 2.05 |
| | 7 | 0.08 | 0.28 | 2.1 | 3.6 | 0.49 | 0.27 | - | 0.51 | - | 0.006 | 3.5 | 0.06 | 0.05 | 0.28 | 0.09 | 1.51 |
| | 8 | 0.08 | 0.28 | 2.3 | 3.6 | 0.49 | 0.27 | - | 0.35 | - | 0.006 | 3.5 | 0.06 | 0.05 | 0.28 | 0.09 | 1.40 |
| | 9 | 0.08 | 0.28 | 2.4 | 3.6 | 0.49 | 0.27 | - | 0.18 | - | 0.006 | 3.5 | 0.06 | 0.05 | 0.28 | 0.09 | 1.34 |
| | 10 | 0.08 | 0.25 | 2.4 | 3.6 | 0.49 | 0.27 | - | 0.18 | - | - | 3.5 | 0.05 | 0.05 | 0.28 | 0.07 | 1.36 |
| | 11 | 0.08 | 0.25 | 2.4 | 3.6 | 0.49 | 0.35 | - | - | - | - | 3.6 | 0.06 | 0.05 | 0.28 | 0.07 | 1.36 |
| | 12 | 0.08 | 0.24 | 2.4 | 3.6 | 0.49 | 0.18 | - | - | - | - | 3.6 | 0.06 | 0.05 | 0.28 | 0.07 | 1.36 |
| | 13 | 0.08 | 0.25 | 1.9 | 4.4 | 0.49 | 0.27 | - | - | - | - | 3.5 | 0.05 | 0.05 | 0.28 | 0.07 | 2.05 |
| | 14 | 0.10 | 0.26 | 2.4 | 3.5 | 0.49 | 0.18 | - | - | 0.017 | 0.006 | 3.6 | 0.06 | 0.05 | 0.28 | 0.07 | 1.32 |
| | 15 | 0.09 | 0.26 | 2.1 | 3.6 | 0.49 | 0.18 | 0.34 | - | - | - | 3.6 | 0.06 | 0.05 | 0.28 | 0.07 | 1.53 |
| | 16 | 0.09 | 0.26 | 2.2 | 3.6 | 0.49 | 0.18 | 0.23 | - | - | - | 3.6 | 0.06 | 0.05 | 0.28 | 0.07 | 1.46 |
| | 17 | 0.09 | 0.26 | 2.3 | 3.6 | 0.49 | 0.18 | 0.12 | - | - | - | 3.6 | 0.06 | 0.05 | 0.28 | 0.07 | 1.41 |
| | 18 | 0.10 | 0.28 | 2.3 | 3.6 | 0.49 | 0.18 | - | - | - | - | 3.6 | 0.06 | 0.05 | 0.28 | 0.08 | 1.40 |
| | 19 | 0.10 | 0.26 | 2.4 | 3.6 | 0.49 | 0.18 | - | - | - | - | 3.6 | 0.06 | 0.05 | 0.28 | 0.07 | 1.35 |
| | 20 | 0.08 | 0.26 | 2.2 | 3.2 | 0.49 | 0.53 | - | - | - | - | 3.6 | 0.06 | 0.05 | 0.28 | 0.07 | 1.30 |
| | 21 | 0.10 | 0.26 | 2.4 | 3.5 | 0.49 | 0.18 | - | - | 0.031 | 0.006 | 3.6 | 0.06 | 0.05 | 0.28 | 0.07 | 1.32 |
| | 22 | 0.10 | 0.27 | 2.6 | 3.6 | 0.49 | 0.18 | - | - | - | - | 3.4 | 0.05 | 0.05 | 0.28 | 0.07 | 1.25 |
| | 23 | 0.05 | 0.26 | 1.9 | 4.4 | 0.49 | 0.53 | - | - | - | - | 3.4 | 0.05 | 0.05 | 0.18 | 0.07 | 2.04 |
| | 24 | 0.08 | 0.25 | 1.1 | 5.2 | 0.49 | 0.27 | - | - | - | - | 3.5 | 0.05 | 0.05 | 0.28 | 0.07 | 3.85 |

**Table 5**

| No. | | Chemical components of wire (mass%) | | | | | | | | | | | | | | | [Ni]/([Mn]+[Si]) |
|---|---|---|---|---|---|---|---|---|---|---|---|---|---|---|---|---|---|
| | | C | Si | Mn | Ni | Mg | Mo | Cr | Cu | V | B | Ti | Al | Zr | F | Total of Na and K | |
| Comparative Examples | 25 | 0.10 | 0.42 | 2.6 | 2.4 | 0.47 | 0.14 | - | - | - | - | 3.4 | 0.05 | 0.04 | 0.27 | 0.07 | 0.79 |
| | 26 | 0.08 | 0.26 | 1.9 | 3.6 | 0.49 | 0.70 | - | - | - | - | 3.6 | 0.06 | 0.05 | 0.28 | 0.07 | 1.67 |
| | 27 | 0.07 | 0.33 | 2.6 | 1.6 | 0.43 | - | - | 0.37 | - | - | 3.5 | 0.04 | 0.04 | 0.20 | 0.28 | 0.55 |
| | 28 | 0.05 | 0.40 | 2.7 | - | 0.47 | 0.68 | - | - | - | - | 3.4 | 0.04 | 0.04 | 0.19 | 0.25 | - |
| | 29 | 0.08 | 0.25 | 0.8 | 5.7 | 0.49 | 0.27 | - | - | - | - | 3.5 | 0.05 | 0.05 | 0.28 | 0.07 | 5.43 |
| | 30 | 0.10 | 0.26 | 3.3 | 3.3 | 0.46 | 0.17 | - | - | - | - | 3.1 | 0.05 | 0.04 | 0.27 | 0.06 | 0.93 |
| | 31 | 0.10 | 0.27 | 2.6 | 2.4 | 0.48 | 0.18 | - | 0.90 | - | - | 3.6 | 0.06 | 0.05 | 0.28 | 0.07 | 0.84 |
| | 32 | 0.12 | 0.40 | 2.3 | 1.5 | 0.47 | - | 0.66 | - | - | - | 3.4 | 0.05 | 0.04 | 0.28 | 0.07 | 0.56 |
| | 33 | 0.10 | 0.26 | 2.4 | 3.5 | 0.49 | 0.18 | - | - | 0.046 | 0.006 | 3.6 | 0.05 | 0.05 | 0.28 | 0.07 | 1.32 |
| | 34 | 0.07 | 0.35 | 2.8 | 2.5 | 0.49 | - | - | - | - | 0.003 | 3.5 | 0.04 | 1.53 | 0.20 | 0.25 | 0.79 |
| | 35 | 0.10 | 0.26 | 3.1 | 3.4 | 0.47 | 0.17 | - | - | - | - | 3.2 | 0.05 | 2.27 | 0.27 | 0.06 | 1.01 |
| | 36 | 0.10 | 0.26 | 3.0 | 3.5 | 0.48 | 0.18 | - | - | - | 0.003 | 3.2 | 0.05 | 0.04 | 0.28 | 0.06 | 1.07 |

**Table 6**

| No. | | Evaluation results | | | | | |
|---|---|---|---|---|---|---|---|
| | | As -welded | | Low LMP condition (580°C × 2 hours) | | High LMP condition (620°C × 8 hours) | |
| | | Tensile strength TS (MPa) | vE-40°C(J) | Tensile strength TS (MPa) | vE-40°C(J) | Tensile strength TS (MPa) | vE-40°C(J) |
| Examples | 1 | 844 | 73 | 828 | 69 | 796 | 73 |
| | 2 | 793 | 74 | 780 | 63 | 741 | 94 |
| | 3 | 822 | 67 | 833 | 69 | 772 | 83 |
| | 4 | 789 | 79 | 788 | 62 | 760 | 94 |
| | 5 | 827 | 64 | 844 | 63 | 777 | 83 |
| | 6 | 848 | 66 | 825 | 72 | 757 | 75 |
| | 7 | 833 | 66 | 800 | 63 | 749 | 85 |
| | 8 | 828 | 71 | 788 | 71 | 760 | 88 |
| | 9 | 828 | 63 | 788 | 64 | 768 | 98 |
| | 10 | 829 | 67 | 788 | 75 | 767 | 96 |
| | 11 | 815 | 79 | 797 | 72 | 755 | 91 |
| | 12 | 788 | 81 | 763 | 83 | 722 | 102 |
| | 13 | 796 | 77 | 799 | 82 | 757 | 93 |
| | 14 | 812 | 75 | 798 | 61 | 776 | 81 |
| | 15 | 841 | 81 | 770 | 70 | 736 | 85 |
| | 16 | 843 | 73 | 784 | 73 | 751 | 78 |
| | 17 | 826 | 77 | 770 | 73 | 749 | 88 |
| | 18 | 837 | 90 | 766 | 78 | 739 | 93 |
| | 19 | 825 | 77 | 807 | 78 | 765 | 88 |
| | 20 | 852 | 60 | 841 | 52 | 793 | 77 |
| | 21 | 812 | 77 | 806 | 55 | 775 | 76 |
| | 22 | 842 | 72 | 817 | 58 | 779 | 89 |
| | 23 | 835 | 68 | 798 | 62 | 774 | 81 |
| | 24 | 762 | 80 | 762 | 76 | 725 | 86 |
| Comparative Examples | 25 | 827 | 71 | 787 | 35 | 716 | 87 |
| | 26 | 877 | 64 | 898 | 44 | 811 | 79 |
| | 27 | 767 | 105 | 692 | 28 | 613 | 65 |
| | 28 | 779 | 107 | 781 | 89 | 692 | 53 |
| | 29 | 708 | 80 | 716 | 93 | 686 | 94 |
| | 30 | 821 | 56 | - | - | - | - |
| | 31 | 862 | 67 | 907 | 26 | 748 | 86 |
| | 32 | 820 | 78 | - | - | 723 | 12 |
| | 33 | 875 | 50 | 903 | 34 | 857 | 65 |
| | 34 | 733 | 71 | 660 | 30 | 627 | 56 |
| | 35 | 883 | 65 | 869 | 32 | 806 | 87 |
| | 36 | 893 | 67 | 865 | 36 | 803 | 90 |

As shown in Tables 4 and 5 above, in Example Nos. 1 to 24 where the contents of the respective components in the wires were within the numerical ranges of the present invention, the tensile strength (TS) of the as-welded samples and the tensile strength (TS) after PWHT under two different conditions were all equal to or higher than the target 720 MPa, and, furthermore, low-temperature toughness as excellent as 50 J or higher in terms of the absorbed energy at -40°C could be obtained. This shows that a weld metal having excellent low-temperature toughness while maintaining the target strength could be obtained not only as as-welded but also under a wide range of PWHT conditions.

Furthermore, since Example Nos. 1 to 24 were obtained by performing gas shielded arc welding on wires in which the contents of the respective components were within the numerical ranges of the present invention, welding joints having weld zones having excellent low-temperature toughness while maintaining the target strength could be obtained not only as as-welded but also under a wide range of PWHT conditions.

Meanwhile, in Comparative Example No. 25, the Ni content in the wire was below the lower limit of the numerical range of the present invention, and the value obtained from [Ni]/([Mn] + [Si]) was below the lower limit of the numerical range of the present invention; thus, the low-temperature toughness after the PWHT under the low LMP condition and the tensile strength after the PWHT under the high LMP condition decreased.

In Comparative Example No. 26, since the Mo content in the wire exceeded the upper limit of the numerical range of the present invention, the low-temperature toughness after the PWHT under the low LMP condition decreased.

In Comparative Example No. 27, the Ni content and the Mo content in the wire were below the lower limits of the numerical ranges of the present invention, and the value obtained from [Ni]/([Mn] + [Si]) was below the lower limit of the numerical range of the present invention; thus, the tensile strength and the low-temperature toughness after the PWHT under the low LMP condition decreased, and the tensile strength after the PWHT under the high LMP condition decreased.

In Comparative Example No. 28, since the Ni content in the wire was below the lower limit of the numerical range of the present invention, the tensile strength after the PWHT under the high LMP condition decreased.

In Comparative Example No. 29, the Mn content in the wire was below the lower limit of the numerical range of the present invention, and the value obtained from [Ni]/([Mn] + [Si]) exceeded the upper limit of the numerical range of the present invention; thus, the tensile strength as as-welded and after the PWHT under the low condition and the PWHT under the high condition decreased.

In Comparative Example No. 30, since the Mn content in the wire exceeded the upper limit of the numerical range of the present invention, the test pieces became extremely brittle after the PWHT under the low LMP condition and the high LMP condition, and fracture occurred.

In Comparative Example No. 31, the Ni content in the wire was below the lower limit of the numerical range of the present invention, the Cu content in the wire exceeded the upper limit of the numerical range of the present invention, and the value obtained from [Ni]/([Mn] + [Si]) was below the lower limit of the numerical range of the present invention; thus, the low-temperature toughness after the PWHT under the low LMP condition decreased.

In Comparative Example No. 32, the Ni content and the Mo content in the wire were below the lower limits of the numerical ranges of the present invention, the C content and the Cr content in the wire exceeded the upper limits of the numerical ranges of the present invention, and the value obtained from [Ni]/([Mn] + [Si]) was below the lower limit of the numerical range of the present invention; thus, the test pieces became excessively brittle after the PWHT under the low LMP condition, and fracture occurred. Moreover, the low-temperature toughness after the PWHT under the high LMP condition decreased.

In Comparative Example No. 33, since the V content in the wire exceeded the upper limit of the numerical range of the present invention, the low-temperature toughness after the PWHT under the low LMP condition decreased.

In Comparative Example No. 34, the Ni content and the Mo content in the wire were below the lower limits of the numerical ranges of the present invention, and the value obtained from [Ni]/([Mn] + [Si]) was below the lower limit of the numerical range of the present invention; thus, the tensile strength and the low-temperature toughness after the PWHT under the low LMP condition decreased, and the tensile strength after the PWHT under the high LMP condition decreased.

In Comparative Example No. 35, the Mn content in the wire exceeded the upper limit of the numerical range of the present invention, and the value obtained from [Ni]/([Mn] + [Si]) was below the lower limit of the numerical range of the present invention; thus, the low-temperature toughness after the PWHT under the low LMP condition decreased.

In Comparative Example No. 36, since the value obtained from [Ni]/([Mn] + [Si]) was below the lower limit of the numerical range of the present invention, the low-temperature toughness after the PWHT under the low LMP condition decreased.

## Claims

1. A flux-cored wire constituted by a steel sheath filled with a flux, the wire comprising, relative to a total mass of the wire:
C: 0.01 mass% or more and 0.10 mass% or less,
Si: more than 0 mass% and 0.45 mass% or less,
Mn: 1.0 mass% or more and 3.0 mass% or less,
Ni: 3.1 mass% or more and 5.5 mass% or less,
Mg: 0.10 mass% or more and 1.00 mass% or less,
Mo: 0.05 mass% or more and 0.65 mass% or less,
Cr: 0.65 mass% or less,
Cu: 0.85 mass% or less, and
V: 0.045 mass% or less,
wherein, when
a Ni content in the wire relative to the total mass of the wire in terms of mass% is represented by [Ni],
a Mn content in the wire relative to the total mass of the wire in terms of mass% is represented by [Mn], and
a Si content in the wire relative to the total mass of the wire in terms of mass% is represented by [Si],
[Ni]/([Mn] + [Si]) is 1.10 or more and 5.40 or less.

2. The flux-cored wire according to Claim 1, further comprising, relative to the total mass of the wire:
B: 0.10 mass% or less.

3. The flux-cored wire according to Claim 1, further comprising at least one element selected from the group consisting of Ti, Al, Zr, F, Na, and K within the following ranges relative to the total mass of the wire:
Ti: 2.5 mass% or more and 6.0 mass% or less,
Al: 0.50 mass% or less,
Zr: 0.50 mass% or less,
F: 0.10 mass% or more and 0.50 mass% or less, and
a total of Na and K: 0.01 mass% or more and 0.30 mass% or less.

4. The flux-cored wire according to Claim 2, further comprising at least one element selected from the group consisting of Ti, Al, Zr, F, Na, and K within the following ranges relative to the total mass of the wire:
Ti: 2.5 mass% or more and 6.0 mass% or less,
Al: 0.50 mass% or less,
Zr: 0.50 mass% or less,
F: 0.10 mass% or more and 0.50 mass% or less, and
a total of Na and K: 0.01 mass% or more and 0.30 mass% or less.

5. A weld metal obtained by performing gas shielded arc welding by using the flux-cored wire according to any one of Claims 1 to 4.

6. A gas shielded arc welding method comprising performing gas shielded arc welding by using the flux-cored wire according to any one of Claims 1 to 4.

7. A welding joint production method comprising performing gas shielded arc welding by using high tensile strength steel as a base metal and the flux-cored wire according to any one of Claims 1 to 4.
